(19) **Europäisches Patentamt / European Patent Office / Office européen des brevets**

(11) **EP 4 200 604 B1**

(12) **FASCICULE DE BREVET EUROPEEN**

(45) Date de publication et mention de la délivrance du brevet:
**13.08.2025 Bulletin 2025/33**

(21) Numéro de dépôt: **21762049.1**

(22) Date de dépôt: **17.08.2021**

(51) Classification Internationale des Brevets (IPC):
**G01N 29/44** (2006.01)     **G06N 3/045** (2023.01)
**G06N 3/08** (2023.01)

(52) Classification Coopérative des Brevets (CPC):
**G01N 29/4481; G06N 3/045; G06N 3/08**

(86) Numéro de dépôt international:
**PCT/EP2021/072868**

(87) Numéro de publication internationale:
**WO 2022/038159 (24.02.2022 Gazette 2022/08)**

(54) **PROCÉDÉ DE CARACTÉRISATION D'UNE PIÈCE PAR CONTRÔLE NON DESTRUCTIF**

**VERFAHREN ZUR CHARAKTERISIERUNG EINES TEILS DURCH ZERSTÖRUNGSFREIE PRÜFUNG**

**METHOD FOR CHARACTERIZING A PART THROUGH NON-DESTRUCTIVE INSPECTION**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.08.2020 FR 2008565**

(43) Date de publication de la demande:
**28.06.2023 Bulletin 2023/26**

(73) Titulaire: **Commissariat à l'Energie Atomique et aux Energies Alternatives**
**75015 Paris (FR)**

(72) Inventeurs:
• **FISHER, Clément**
  **91400 ORSAY (FR)**
• **MIORELLI, Roberto**
  **91191 Gif-sur-Yvette Cedex (FR)**
• **MESNIL, Olivier**
  **91400 ORSAY (FR)**

(74) Mandataire: **INNOV-GROUP**
**209 Avenue Berthelot**
**69007 Lyon (FR)**

(56) Documents cités:
**FR-A1- 2 721 111     FR-A1- 3 075 376**
**US-A1- 2019 094 124**

• **SAEED NUMAN ET AL: "Automatic defects detection in CFRP thermograms, using convolutional neural networks and transfer learning", INFRARED PHYSICS AND TECHNOLOGY, ELSEVIER SCIENCE, GB, vol. 102, 23 September 2019 (2019-09-23), pages 1 - 8, XP085883933, ISSN: 1350-4495, [retrieved on 20190923], DOI: 10.1016/ J.INFRARED.2019.103048**
• **ZHANG MEI ET AL: "Two-step Convolutional Neural Network for Image Defect Detection", 2019 CHINESE CONTROL CONFERENCE (CCC), TECHNICAL COMMITTEE ON CONTROL THEORY, CHINESE ASSOCIATION OF AUTOMATION, 27 July 2019 (2019-07-27), pages 8525 - 8530, XP033635565, DOI: 10.23919/ CHICC.2019.8866625**
• **VALLERAND S ET AL: "Defect characterization in pulsed thermography: a statistical method compared with Kohonen and Perceptron neural networks", NDT&E INTERNATIONAL,, vol. 33, no. 5, 1 July 2000 (2000-07-01), pages 307 - 315, XP004292702, ISSN: 0963-8695, DOI: 10.1016/ S0963-8695(99)00056-0**

- MARGRAVE F W ET AL: "The use of neural networks in ultrasonic flaw detection", MEASUREMENT, INSTITUTE OF MEASUREMENT AND CONTROL. LONDON, GB, vol. 25, no. 2, 1 March 1999 (1999-03-01), pages 143 - 154, XP004158745, ISSN: 0263-2241, DOI: 10.1016/S0263-2241(98)00075-X
- MUNIR NAUMAN ET AL: "Performance enhancement of convolutional neural network for ultrasonic flaw classification by adopting autoencoder", NDT&E INTERNATIONAL,, vol. 111, 21 January 2020 (2020-01-21), pages 1 - 12, XP086083918, ISSN: 0963-8695, [retrieved on 20200121], DOI: 10.1016/J.NDTEINT.2020.102218
- PEI CAO ET AL: "Pre-Processing-Free Gear Fault Diagnosis Using Small Datasets with Deep Convolutional Neural Network-Based Transfer Learning", ARXIV.ORG, CORNELL UNIVERSITY LIBRARY, 201 OLIN LIBRARY CORNELL UNIVERSITY ITHACA, NY 14853, 24 October 2017 (2017-10-24), pages 1 - 15, XP081401669, DOI: 10.1109/ACCESS.2018.2837621
- LIU QING ET AL: "A Fault Diagnosis Method Based on Transfer Convolutional Neural Networks", IEEE ACCESS, vol. 7, 11 December 2019 (2019-12-11), pages 171423 - 171430, XP011759027, DOI: 10.1109/ACCESS.2019.2956052
- BAI MINGLIANG ET AL: "Convolutional neural network-based deep transfer learning for fault detection of gas turbine combustion chambers", APPLIED ENERGY, ELSEVIER SCIENCE PUBLISHERS, GB, vol. 302, 12 August 2021 (2021-08-12), pages 1 - 24, XP086768153, ISSN: 0306-2619, [retrieved on 20210812], DOI: 10.1016/J.APENERGY.2021.117509

**Description**

## DOMAINE TECHNIQUE

Le domaine technique de l'invention est l'interprétation de mesures par contrôle non destructif réalisées sur une pièce mécanique ou une partie d'une structure.

## ART ANTERIEUR

Le CND, signifiant Contrôle Non destructif consiste à effectuer une surveillance de pièces ou de structures mécaniques, à l'aide de capteurs, de façon non destructive. L'objectif est d'effectuer un contrôle et/ou détecter et suivre l'apparition de défauts structurels. Il s'agit de suivre l'intégrité d'une pièce contrôlée, de façon à prévenir la survenue d'accidents, ou de prolonger la durée d'utilisation de la pièce dans de bonnes conditions de sécurité.

Le CND est couramment mis en œuvre dans des équipements sensibles, de façon à optimiser le remplacement ou la maintenance. Les applications sont nombreuses dans le contrôle d'équipements industriels, par exemple dans l'exploitation pétrolière, dans le nucléaire, ou dans les transports, par exemple dans l'aéronautique.

Un sous ensemble du CND est désigné par le terme SHM, signifiant Structural Health Monitoring (contrôle de l'état de santé de structures). Dans ce type d'application, les capteurs peuvent être disposés à poste fixe sur ou au sein d'un élément de structure à contrôler. Cela permet d'effectuer une surveillance régulière de l'élément de structure. Le SHM peut être adapté à des contrôles d'éléments considérés comme sensibles, par exemple dans le domaine de l'aéronautique.

Les capteurs utilisés dans le CND sont des capteurs non destructifs, n'induisant pas de dommage sur les pièces contrôlées. Les pièces contrôlées peuvent être des éléments structurels d'équipements industriels ou d'aéronefs, ou des ouvrages de génie civil, par exemple des ponts ou des barrages. Les méthodes mises en œuvre sont variées. Elles peuvent par exemple mettre en œuvre des rayons X, ou des ondes ultrasonores ou la détection par courants de Foucault.

Lors de leur mise en œuvre, les capteurs sont reliés à des moyens informatiques, de façon à pouvoir interpréter les mesures effectuées. La présence d'un défaut, dans une pièce, entraîne une signature du défaut, mesurable par un capteur. Les moyens informatiques effectuent une inversion. Il s'agit, à partir des mesures, d'obtenir des données quantitatives relatives au défaut, par exemple sa position, ou sa forme, ou ses dimensions.

L'inversion peut être réalisée en prenant en compte des modèles analytiques directs, par exemple des modèles polynomiaux, permettant d'établir une relation entre des caractéristiques d'un défaut et des mesures résultant d'un capteur. L'inversion du modèle permet une estimation desdites caractéristiques à partir de mesures réalisées.

Selon une autre approche, les caractéristiques des défauts peuvent être estimées en mettant en œuvre des algorithmes d'intelligence artificielle supervisée, par exemple des réseaux de neurones. Cependant, une difficulté liée à l'utilisation de réseaux de neurones est le recours à une phase d'apprentissage aussi complète que possible, de façon à optimiser les performances de l'estimation. Cela prend du temps et nécessite un nombre important de données.

Les inventeurs proposent un procédé adressant cette question. L'objectif est de faciliter l'apprentissage d'un réseau de neurones destiné à effectuer une inversion, tout en conservant une bonne performance de diagnostic, par exemple dans l'estimation des caractéristiques thermiques ou mécaniques de la pièce.

US2019/094124 A1 divulgue un contrôle non destructif d'une pièce à partir de mesures thermiques pour la détection de points de corrosion, en utilisant deux réseaux neuronaux.

Les articles de Pei Cao et al, "Pre-Processing-Free Gear Fault Diagnosis Using Small Datasets with Deep Convolutional Neural Network-Based Transfer Learning", Cornell University Library, 24 octobre 2017, pages 1-15, et de Liu Qing et al, "A Fault Diagnosis Method Based on Transfer Convolutional Neural Networks", IEEE Access, vol. 7, 11 décembre 2019, pages 171423-171430, enseignent un transfert de paramètres de couches de convolution (learning transfer) entre deux réseaux de neurones.

## EXPOSE DE L'INVENTION

L'objet de l'invention est un procédé de caractérisation d'une pièce selon la revendication 1.

Ainsi, tandis que le premier apprentissage est effectué à partir de mesures effectuées ou simulées sur une première pièce modèle, pouvant être différente de la pièce à caractériser, le deuxième apprentissage est effectué sur la pièce à caractériser elle-même. La première pièce peut être une pièce réelle, différente de la pièce à caractériser, ou une pièce modélisée, pouvant représenter la pièce à caractériser.

Par grandeur physique permettant une caractérisation mécanique ou thermique de la pièce, il est entendu une grandeur mécanique ou électrique ou électromagnétique ou acoustique ou thermique.

Le procédé peut être tel que :

- le premier réseau de neurones comporte une couche d'entrée et une couche de sortie, et éventuellement une couche intermédiaire, entre la couche d'entrée et la couche de sortie ;
- le deuxième apprentissage comporte une adaptation de la couche de sortie et/ou de l'éventuelle couche intermédiaire du premier réseau de neurones, de façon à former une couche du deuxième réseau de neurones.

Selon un mode de réalisation, le premier réseau de neurones est un réseau de neurones convolutif, comportant un bloc d'extraction et un bloc de traitement, le premier réseau de neurones étant tel que :

- le bloc d'extraction est configuré pour extraire des caractéristiques des données d'entrée du premier réseau de neurones, les données d'entrée résultant de la première base de données;
- le bloc de traitement est configuré pour traiter des caractéristiques extraites par le bloc d'extraction;

- le deuxième réseau de neurones est un réseau de neurones convolutif, comportant :

  - le bloc d'extraction du premier réseau de neurones ;
  - ainsi qu'un bloc de classification, le bloc de classification étant configuré pour effectuer une classification des caractéristiques extraites par le bloc d'extraction, le bloc de classification débouchant sur la couche de sortie du deuxième réseau de neurones.

Le bloc de traitement du premier réseau de neurones peut être un bloc de classification, configuré, lors du premier apprentissage, pour effectuer une classification des caractéristiques extraites par le bloc d'extraction.

Le premier réseau de neurones peut être de type auto-encodeur, le bloc de traitement du premier réseau de neurones étant configuré, lors du premier apprentissage, pour reconstruire des données, issues de la première base de données, et formant des données d'entrée du premier réseau de neurones.

Selon un mode de réalisation, le premier et le deuxième réseaux de neurones sont de type perceptron multicouches.

Le premier réseau de neurones peut être utilisé pour initialiser l'apprentissage de tout ou partie du deuxième réseau de neurones.

Au cours du deuxième apprentissage ainsi qu'au cours d'au moins une étape a), voire de chaque étape a), postérieurement au deuxième apprentissage, le capteur peut être disposé à poste fixe, embarqué sur la pièce.

La pièce peut être susceptible de comporter un défaut. L'étape c) peut comporter une détection de la présence d'un défaut dans la pièce, et une caractérisation éventuelle du défaut détecté. La caractérisation de la pièce peut comporter :

- une identification du type de défaut, parmi des types prédéterminés ;
- et/ou une estimation d'au moins une dimension du défaut ;

- et/ou une localisation du défaut dans la pièce ;
- et/ou une détermination d'un nombre de défauts dans la pièce.

La première base de données peut comporter des mesures effectuées ou simulées sur une pièce modèle comportant le défaut.

Le défaut peut être de type : délaminage, et/ou fissure, et/ou perforation et/ou fissure se propageant à partir d'une perforation et/ou présence d'une zone poreuse et/ou une présence d'une inclusion et/ou présence de corrosion.

La pièce peut être constituée d'un matériau composite, comportant des composants assemblés les uns aux autres. Le défaut peut alors être un défaut d'assemblage entre les composants.

Les mesures peuvent être représentatives d'une distribution spatiale :

- de propriétés électriques ou magnétiques ou mécaniques de la pièce ;
- d'une propriété de propagation d'une onde acoustique ou mécanique ou électromagnétique à travers ou le long de la pièce ;
- d'une propriété de réflexion d'une onde acoustique ou mécanique ou d'une onde électromagnétique visible ou infra-rouge par la pièce.

La caractérisation de la pièce peut comporter une variation de la distribution spatiale par rapport à une distribution spatiale de référence.

La caractérisation de la pièce peut comporter :

- une obtention d'une température de la pièce ou d'un contrainte, notamment mécanique, à laquelle est soumise la pièce ;
- ou une obtention d'une distribution spatiale d'une température de la pièce, ou d'une contrainte à laquelle est soumise la pièce.

Les mesures peuvent être de type :

- mesure de courants de Foucault formés dans la pièce sous l'effet d'une excitation de la pièce par un champ magnétique ;
- ou mesure d'ondes acoustiques ou mécaniques se propageant à travers ou le long de la pièce ;
- ou mesure d'une onde lumineuse réfléchie par la pièce lorsque la pièce est illuminée par une onde lumineuse incidente, en particulier dans les domaines infra-rouge ou visible ;
- ou mesure de la transmission d'un rayonnement X ou gamma à travers la pièce lorsque ladite pièce est irradiée par une source de rayonnement X ou gamma.

La deuxième base de données peut comporter un nombre de données inférieur au nombre de données de la première base de données.

L'invention sera mieux comprise à la lecture de l'exposé des exemples de réalisation présentés, dans la suite de la description, en lien avec les figures listées ci-dessous.

## FIGURES

Les figures 1A et 1B schématisent la mise en œuvre de mesures par courants de Foucault sur une pièce conductrice.

La figure 2A représente la structure d'un réseau de neurones convolutif, mis en œuvre dans un premier mode de réalisation.

La figure 2B montre les principales étapes d'un procédé selon l'invention.

La figure 3A montre un défaut considéré lors d'un premier exemple.

La figure 3B est un exemple d'image résultant de mesures simulées sur le défaut représenté sur la figure 3A.

La figure 3C présente des performances de prédiction d'un réseau de neurones, en considérant respectivement des mesures dont le rapport signal à bruit est respectivement de 5 dB (gauche), 20 dB (centre), et 40 dB (droite).

La figure 3D présente des performances de prédiction d'un réseau de neurones selon l'invention, en considérant respectivement des mesures dont le rapport signal à bruit est respectivement de 5 dB (gauche), 20 dB (centre), et 40 dB (droite).

La figure 4 schématise un réseau de neurones mis en œuvre dans un deuxième mode de réalisation.

La figure 5 schématise un réseau de neurones mis en œuvre dans un troisième mode de réalisation.

La figure 6A montre une configuration de mesures selon le troisième mode de réalisation.

La figure 6B montre une simulation d'une propagation d'une onde de flexion à travers une plaque.

La figure 6C est un détail de la figure 6B.

La figure 6D montre une enveloppe d'une onde de flexion se propageant à travers une pièce. La figure 6D a été obtenue expérimentalement.

La figure 6E montre les performances d'estimation d'un premier réseau de neurones obtenu en considérant un première base de données.

La figure 6F est un histogramme de températures prises en compte pour former une deuxième base de données.

La figure 6G montre les performances d'estimation respectives d'un deuxième réseau de neurones, obtenu en mettant en œuvre l'invention (marques en croix), ainsi que d'un réseau de neurones de base, paramétré uniquement avec la deuxième base de données (marques en point).

## EXPOSE DE MODES DE REALISATION PARTICULIERS

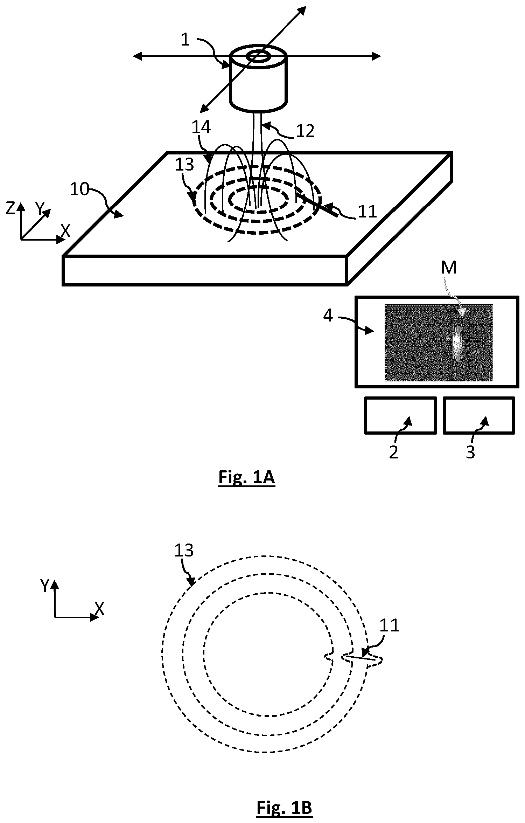

Les figures 1A et 1B schématisent un exemple d'application de l'invention. Un capteur 1 est disposé face à une pièce à contrôler 10, de façon à caractériser la pièce. Il peut notamment s'agir d'une caractérisation thermique ou mécanique. Par caractérisation thermique ou mécanique, on entend une caractérisation des propriétés thermiques ou mécaniques de la pièce : température, déformation, structure.

La pièce à caractériser peut être une pièce monolithique, ou une pièce plus complexe résultant d'un assemblage de plusieurs pièces élémentaires, par exemple une voilure d'une aile d'avion ou une peau d'un fuselage.

La caractérisation peut consister à détecter une présence éventuelle d'un défaut structurel 11. Dans cet exemple, le capteur 1 est configuré pour effectuer des mesures de courants de Foucault générés dans la pièce à contrôler 10. Cette dernière est un pièce conductrice d'électricité. Le principe des mesures non destructives par courants de Foucault est connu. Sous l'effet d'une excitation par un champ magnétique 12, des courants de Foucault 13 sont induits dans la pièce 10. Dans l'exemple représenté, le capteur 1 est une bobine, alimentée par un courant modulé en amplitude. Elle génère un champ magnétique 12, dont des lignes de champ sont représentées sur la figure 1A. Des courants de Foucault 13 sont induits, formant des boucles de courant sur la pièce 10. Les courants de Foucault 13 engendrent un champ magnétique de réaction 14, ce dernier agissant sur l'impédance de la bobine 1. Ainsi, la mesure de l'impédance de la bobine 1 est représentative des courants de Foucault 13 formés dans la pièce 10. En présence d'un défaut 11, comme schématisé sur la figure 1B, les courants de Foucault 13 sont modifiés, ce qui se traduit par une variation d'impédance de la bobine. Ainsi, la mesure de l'impédance de la bobine constitue une signature du défaut.

Dans cet exemple le capteur 1 joue le rôle d'excitation de la pièce 10, ainsi que de capteur de la réaction de la pièce en réponse à l'excitation. Généralement, le capteur est déplacé le long de la pièce, parallèlement à cette dernière. Dans l'exemple représenté, la pièce s'étend selon un axe X et un axe Y. Le capteur peut être déplacé parallèlement à chaque axe, ce qui est matérialisé par les doubles flèches. De façon alternative, on peut mettre en œuvre une matrice de capteurs.

On dispose ainsi d'une série de mesures, formant une distribution spatiale, de préférence bidimensionnelle, d'une grandeur mesurée, en l'occurrence l'impédance du capteur 1. Il est usuel de distinguer les parties réelle et imaginaire de l'impédance. L'impédance mesurée est généralement comparée à une impédance en l'absence de défaut, de façon à obtenir une cartographie de la variation d'impédance $\Delta H$. On peut former une matrice de mesures M, représentant la partie réelle ou la partie imaginaire de l'impédance mesurée en chaque point de mesure.

Le capteur 1 est relié à une unité de traitement 2, comportant une mémoire 3 comprenant des instructions pour permettre la mise en œuvre d'un algorithme de traitement de mesures, dont les principales étapes sont décrites par la suite. L'unité de traitement est usuellement un ordinateur, relié à un écran 4.

Comme décrit en lien avec l'art antérieur, la matrice de mesures M correspond à une répartition spatiale de la réponse de la pièce à l'excitation, chaque mesure étant une signature de la pièce. Une inversion doit être effectuée, de façon à pouvoir conclure à la présence d'un défaut, et, le cas échéant, une caractérisation de ce dernier. L'inversion est effectuée par l'algorithme de traitement mis en œuvre par l'unité de traitement 2.

Par défaut structurel, il est entendu un défaut mécanique affectant la pièce. Il peut notamment s'agir d'une fissure, ou d'un délaminage, ou d'une perforation, formant par exemple un trou traversant, ou d'une fissure se propageant à partir d'un trou, ou d'une zone anormalement poreuse. Le défaut structurel peut également être une présence d'une inclusion d'un matériau indésirable, ou d'une zone corrodée. Le défaut structurel peut affecter la surface de la pièce 10 située face au capteur. Il peut également être localisé en profondeur dans la pièce. Le type de capteur utilisé est sélectionné en fonction du défaut à caractériser.

La pièce à contrôler 10 peut être formée d'un matériau composite. Elle comporte alors des composants assemblés les uns aux autres. Il peut s'agir d'un assemblage de plaques ou de fibres. Le défaut structurel peut être un défaut d'assemblage : il peut s'agir d'un délaminage local de plaques, ou une décohésion de fibres ou de torons de fibres, ou une non uniformité de l'orientation de fibres, ou défaut résultat d'un impact ou choc.

La caractérisation du défaut vise à déterminer le type de défaut affectant la pièce, parmi les types précédemment cités. Elle peut également comporter une localisation du défaut, ainsi qu'une estimation de tout ou partie de ses dimensions.

La pièce à contrôler 10 présente des propriétés mécaniques spatialement distribuées le long de la pièce. La caractérisation de la pièce peut comporter une comparaison d'une distribution de propriétés mécaniques par rapport à une distribution spatiale de référence. Il peut par exemple s'agir d'identifier une partie de la pièce, dans laquelle les propriétés mécaniques ne correspondent pas à des propriétés mécaniques de référence. La propriété mécanique peut être le module d'Young, ou la densité, ou une vitesse de propagation d'une onde de flexion. La distribution spatiale de référence peut être issue d'une spécification, et correspondre à un objectif à atteindre. Elle peut résulter d'un modèle ou de mesures expérimentales effectuées sur une pièce modèle.

Le paragraphe précédent s'applique également à des propriétés électriques ou magnétiques, ou encore à une contrainte à laquelle est exposée la pièce à contrôler. Il peut par exemple s'agir d'une contrainte de température ou d'une contrainte de pression à laquelle est soumise la pièce au cours de son exploitation. Aussi, la caractérisation de la pièce peut consister à établir une température de la pièce, ou un niveau de contrainte mécanique (effort, pression, déformation) auquel est soumis la pièce. La caractérisation peut également consister à établir une distribution spatiale d'une température de la pièce ou, de façon plus générale, d'une contrainte à laquelle est soumise la pièce.

Le traitement des mesures peut être réalisé en mettant en œuvre un algorithme d'intelligence artificielle supervisé, par exemple basé sur un réseau de neurones. L'apprentissage de l'algorithme peut être effectué en constituant une base de données formées à partir de mesures réalisées ou simulées sur une pièce dont les caractéristiques sont connues : forme, dimensions, constitution, température, éventuellement présence d'un défaut et autre grandeur physique permettant de caractériser l'éventuel défaut.

La base de données peut être établie par simulation, en utilisant un logiciel de simulation dédié. Un exemple de logiciel dédié est le logiciel CIVA (fournisseur : Extende), permettant notamment de simuler différentes modalités de contrôle non destructif : propagation d'ultrasons, effets de courants de Foucault et radiographie X. Un tel logiciel permet de simuler des mesures à partir d'une modélisation de la pièce. Le recours d'un tel logiciel peut permettre de constituer une base de données permettant l'apprentissage de l'algorithme d'intelligence artificielle utilisé.

Premier mode de réalisation.

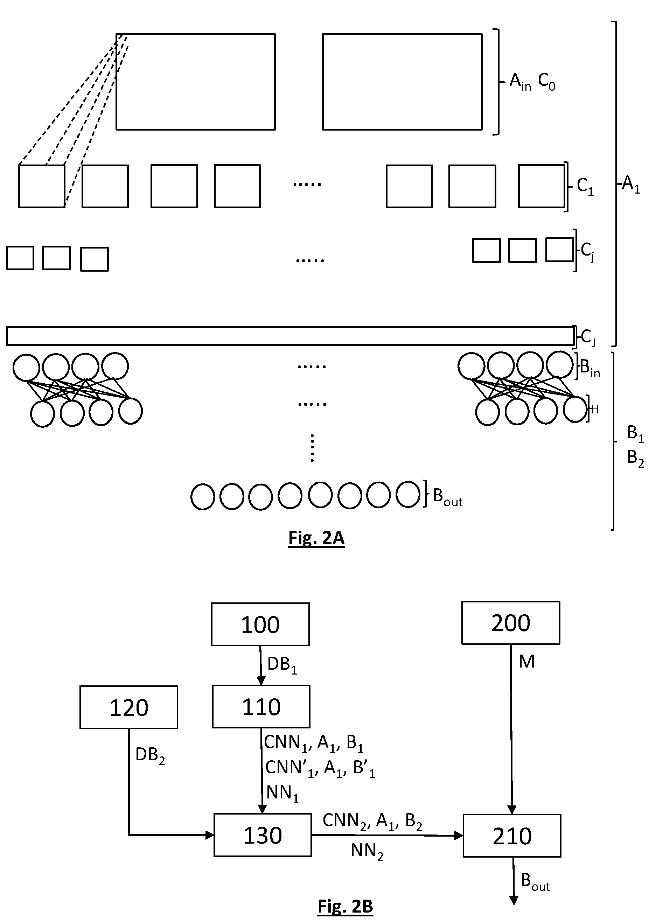

Selon un premier mode de réalisation, l'algorithme d'intelligence artificielle supervisé est basé sur un réseau de neurones convolutif. Un tel réseau de neurones convient aux applications dans lesquelles les données d'entrée sont matricielles et peuvent être assimilées à des images. Chaque image correspond à une cartographie d'une grandeur physique mesurée, et susceptible de varier en présence d'un défaut dans la pièce. La figure 2A schématise l'architecture d'un tel réseau.

Le réseau de neurones convolutif comporte un bloc d'extraction de caractéristiques $A_1$, relié à un bloc de traitement $B_1$. Le bloc de traitement est configuré pour traiter les caractéristiques extraites du bloc d'extraction $A_1$. Dans cet exemple, le bloc de traitement $B_1$ est un bloc de classification. Il permet une classification sur la base des caractéristiques extraites par le bloc d'extraction $A_1$. Le réseau de neurones convolutif est alimenté par des données d'entrée $A_{in}$, qui correspondent à une ou plusieurs images. Dans l'exemple considéré, les données d'entrée forment une image, obtenue par une concaténation de deux images représentant respectivement la partie réelle et la partie imaginaire de la variation d'impédance $\Delta H$ mesurée en différents points de mesure, régulièrement répartis, face à la pièce, selon un arrangement matriciel.

Le bloc d'extraction de caractéristiques $A_1$ comporte J couches $C_1...C_j...C_J$ en aval des données d'entrée. J étant un entier supérieur ou égal à 1. Chaque couche $C_j$ est obtenue par application d'un filtre de convolution aux images d'une couche précédente $C_{j-1}$. L'indice j est le rang de chaque couche. La couche $C_0$ correspond aux données d'entrée $A_{in}$. Les paramètres des filtres de convolution appliqués à chaque couche sont déterminés lors de l'apprentissage. La dernière couche $C_J$ peut comporter un nombre de termes dépassant plusieurs dizaines, voire plusieurs centaines, voire plusieurs milliers. Ces termes correspondent à des caractéristiques extraites de chaque image formant les données d'entrée.

Entre deux couches successives, le procédé peut comporter des opérations de réduction de dimension, par exemple des opérations usuellement désignées par le terme « pooling » (regroupement). Il s'agit de remplacer les valeurs d'un groupe de pixels par une seule valeur, par exemple la moyenne, ou la valeur maximale, ou la valeur minimale du groupe considéré. On peut par exemple appliquer un "max pooling" (regroupement maximal), ce qui correspond au remplacement des valeurs de chaque groupe de pixels par la valeur maximale des pixels dans le groupe. La dernière couche $C_J$ fait l'objet d'une opération usuellement désignée par le terme « Flatten » (aplatissement), de façon que les valeurs de cette couche forment un vecteur. Ces valeurs constituent les caractéristiques extraites de chaque image.

Le bloc de classification $B_1$ est un réseau de neurones interconnecté, usuellement désigné par le terme « fully connected » ou perceptron multicouches. Il comporte une couche d'entrée $B_{in}$, et une couche de sortie $B_{out}$. La couche d'entrée $B_{in}$ est formée par les caractéristiques du vecteur résultant du bloc d'extraction $A_1$. Entre la couche d'entrée $B_{in}$ et la couche de sortie $B_{out}$, on peut prévoir une ou plusieurs couches H. On dispose ainsi successivement de la couche d'entrée $B_{in}$, de chaque couche H et de la couche de sortie $B_{out}$.

A chaque couche peut être attribué un rang k. Le rang k = 1 correspond à la couche d'entrée $B_{in}$. Chaque couche comporte des nœuds, dits nœuds interconnectés, le nombre de nœuds interconnectés d'une couche pouvant être différent du nombre de nœuds interconnectés d'une autre couche. D'une façon générale, lorsque k ≥ 2, la valeur d'un nœud $y_{n,k}$ d'une couche de rang $k$ est telle que

$$y_{n,k} = f_n\left(\sum_m (w_{m,n} y_{m,k-1} + b_m)\right)$$

où

- $y_{m,k-1}$ est la valeur d'un nœud de la couche précédente $k - 1$, $m$ représentant un ordre du nœud de la couche précédente, m étant un entier compris entre 1 et $M_{k-1}$, $M_{k-1}$ correspondant à la dimension de la couche précédente, de rang $k - 1$ ;
- $b_m$ est un biais associé à chaque nœud $y_{m,k-1}$ de la couche précédente
- $f_n$ est une fonction d'activation associé au nœud d'ordre n de la couche considérée, $n$ étant un entier compris entre 1 et $N_k$, $N_k$ correspondant à la dimension de la couche de rang $k$;
- $w_{m,n}$ est un terme de pondération pour le noeud de rang m de la couche précédente (rang k-1) et le nœud de rang $n$ de couche considérée (rang $k$).

La forme de chaque fonction d'activation $f_n$ est déterminée par l'homme du métier. Il peut par exemple s'agir d'une fonction d'activation $f_n$ de type tangente hyperbolique ou sigmoïde.

La couche de sortie $B_{out}$ comporte des valeurs permettant de caractériser un défaut identifié par les images de la couche d'entrée $A_{in}$. Elle constitue le résultat de l'inversion effectuée par l'algorithme.

Dans l'application la plus simple, la couche de sortie peut ne comporter qu'un seul nœud, prenant la valeur 0 ou 1 selon que l'analyse révèle la présence d'un défaut ou non.

Dans une application d'identification, la couche de sortie $B_{out}$ peut comporter autant de nœuds que de types de défaut considérés, chaque nœud correspondant à une probabilité de présence d'un type de défaut parmi des types prédéterminés (fissure, trou, délaminage...).

Dans une application de dimensionnement, la couche de sortie peut comporter autant de nœuds que de dimensions d'un défaut, ce qui suppose une prise en compte d'un modèle géométrique de défaut.

Dans une application de localisation, la couche de sortie peut comporter des coordonnées indiquant la position, bidimensionnelle ou tridimensionnelle, d'un défaut dans la pièce.

Dans une application de caractérisation, la couche de sortie peut contenir des informations sur la pièce inspectée, par exemple une distribution spatiales de propriétés mécaniques (ex : module d'Young), ou électriques ou magnétiques ou thermiques (par exemple la température), ou géométriques (par exemple une dimension de la pièce). La dimension de la couche de sortie correspond à un nombre de points de la pièce en lesquels la propriété mécanique est estimée sur la base des données d'entrée.

Les applications peuvent être combinées, de façon à obtenir à la fois une localisation et un dimensionnement, ou une localisation, une identification et un dimensionnement.

Un élément important de l'invention est que pour une application donnée, le bloc d'extraction $A_1$ peut être établi en utilisant un apprentissage aussi approfondi que possible, en prenant en compte une première base de données $DB_1$. La première base de données est aussi exhaustive que possible. Elle est de préférence obtenue dans des conditions expérimentales de laboratoire et/ou ou par simulation, en prenant en compte une première pièce, qu'il s'agisse d'une pièce modélisée ou d'une pièce réelle. Cela permet de disposer d'un grand nombre de valeurs mesurées ou modélisées, formant la couche d'entrée $A_{in}$. Il est entendu qu'au cours du premier apprentissage, comme au cours d'un deuxième apprentissage décrit par la suite, la couche de sortie $B_{out}$ est connue.

La première phase d'apprentissage permet de paramétrer le bloc d'extraction $A_1$ et un premier bloc de classification $B_1$. L'objectif de la première phase d'apprentissage est de disposer d'un bloc d'extraction $A_1$ performant en terme d'extraction d'une information pertinente à partir des données d'entrée.

La première base de données $DB_1$ peut comporter un premier nombre d'images $N_1$ pouvant dépasser plusieurs centaines, voire plusieurs milliers, voire des millions. Ainsi, suite au premier apprentissage, le réseau de neurones $CNN_1$, formé par la combinaison des blocs $A_1$ et $B_1$ est supposé présenter une performance de prédiction satisfaisante.

Un élément important de l'invention est de pouvoir utiliser une partie du premier réseau de neurones pour effectuer le deuxième apprentissage. Au cours du deuxième apprentissage, on utilise, en tant que données d'entrée, des mesures réalisées expérimentalement sur une deuxième pièce, qui correspond à la pièce à caractériser. Ainsi, le deuxième apprentissage est établi en utilisant une deuxième base de données $DB_2$, établie à l'aide de mesures expérimentales, effectuées sur la pièce à caractériser, sur la base de laquelle le deuxième apprentissage est effectué.

Un aspect important de l'invention est que lors du deuxième apprentissage, le bloc d'extraction $A_1$, issu du premier apprentissage, est conservé. On considère que le premier apprentissage est suffisamment exhaustif pour que la performance du bloc d'extraction, en terme d'extraction de caractéristiques des images fournies en entrée, soit considérée comme suffisante. Le bloc d'extraction peut alors être utilisé lors du deuxième apprentissage. Autrement dit, on considère que les caractéristiques extraites par le bloc $A_1$ constituent un bon descripteur des mesures formant la couche d'entrée.

Le deuxième apprentissage se limite ainsi à une mise à jour du paramétrage du bloc de classification, de façon à obtenir un deuxième bloc de classification $B_2$ adapté à la pièce caractérisée. Le deuxième apprentissage peut alors être mis en œuvre avec une deuxième base de données $DB_2$ prenant en compte des incertitudes ou des variabilités résultant de la mise en œuvre de mesures expérimentales sur la pièce à caractériser. Il s'agit de prendre en compte des variabilités affectant classiquement les mesures in-situ, réalisées sur la pièce à caractériser, et difficilement modélisables, parmi lesquelles :

- des variabilités affectant le capteur : bruit du capteur, incertitudes de mesure, fluctuations de la position du capteur par rapport à la pièce, paramètres environnementaux pouvant affecter les mesures, par exemple la température ou l'humidité, et éventuellement la pression ;
- des variabilités affectant la pièce à caractériser : composition réelle de la pièce, état de surface de la pièce, forme de la pièce, éventuels défauts de fabrication.

Au cours du deuxième apprentissage, le deuxième bloc de classification $B_2$ peut être initialisé en prenant en compte les paramètres régissant le premier bloc de classification $B_1$. Selon une possibilité, le deuxième bloc de classification $B_2$ peut comporter un même nombre de couches que le premier bloc de classification $B_1$. Ces dernières peuvent posséder le même nombre de nœuds que les couches du premier bloc de classification. La dimension de la couche de sortie dépend des caractéristiques du défaut à estimer. Aussi, la dimension de la couche de sortie du deuxième bloc de classification $B_2$ peut être différente de celle du premier bloc de classification $B_1$. Selon une possibilité, le nombre de couches et/ou la dimension des couches du deuxième bloc de classification est différent du nombre de couches et/ou de la dimension des couches du premier bloc de classification.

Quel que soit le mode de réalisation, la méthode permet une mise en œuvre d'un premier apprentissage dans des conditions de laboratoire, sur la base de simulations ou de conditions expérimentales optimisées. Le premier apprentissage est suivi d'un deuxième apprentissage plus proche de la réalité du terrain : prise en compte de mesures expérimentales ainsi que de conditions de mesure plus réalistes, effectuées directement sur la pièce caractérisée. L'invention permet une limitation du nombre de mesures nécessaires au deuxième apprentissage, tout en permettant l'obtention d'un réseau de neurones présentant de bonnes performances de prédiction : le deuxième apprentissage peut ainsi être basé sur un nombre limité de mesures expérimentales. On parle d'apprentissage frugal. Cela constitue un avantage important, puisque l'acquisition de mesures dans des conditions réalistes est habituellement plus complexe que l'obtention de mesures en laboratoire ou de mesures simulées. Le deuxième apprentissage peut permettre la prise en compte de spécificités difficilement modélisables, par exemple le bruit de mesure, ou des variations relativement à la composition ou à la forme réelles de la pièce.

Le premier apprentissage peut être perçu comme un apprentissage général, pouvant convenir à différentes applications particulières, ou à différents types ou formes de pièces, ou à différents types de défauts. Il est essentiellement destiné à disposer d'un bloc d'extraction $A_1$ permettant d'extraire des caractéristiques pertinentes des données d'entrée. Le deuxième apprentissage est un apprentissage plus ciblé, adapté à la pièce à caractériser. L'invention facilite l'obtention du deuxième apprentissage, car elle nécessite nettement moins de données d'entrée que le premier apprentissage. Ainsi, un même premier apprentissage peut être utilisé pour effectuer différents deuxièmes apprentissages, correspondant respectivement à des configurations différentes.

Le premier apprentissage est réalisé sur une base de données permettant une prise en compte de différentes conditions : par exemple différents types ou dimensions d'un défaut, différentes positions d'un défaut, différentes compositions ou formes de pièces, différents positionnement du capteur par rapport à la pièce. Cela permet de prévoir une première base de donnée plus exhaustive, prenant par exemple en compte une grande variabilité :

- dans les dimensions et/ou dans la forme du défaut ou de la pièce
- dans la constitution de la pièce, différents types de matériaux pouvant être successivement considérés.

Lors du deuxième apprentissage, la pièce considérée est la pièce à analyser. Le deuxième apprentissage peut notamment être effectué alors que la pièce à analyser est considérée comme saine, c'est-à-dire sans défaut. Le deuxième apprentissage permet alors de caractériser l'état sain en prenant en compte les variabilités expérimentales précédemment décrites. Le deuxième apprentissage peut être réalisé en disposant un réseau de capteurs sur la pièce à caractériser, afin de suivre son état de santé. Le réseau de capteur forme alors un réseau adapté à une surveillance régulière de la pièce, selon les principes du SHM décrit dans l'art antérieur. Le deuxième apprentissage est effectué sur la base de mesures régulières sur la pièce. Il en résulte des mesures considérées comme représentatives de l'état sain de la pièce. A l'issue de la période d'apprentissage, le deuxième réseau de neurones est utilisé pour suivre une évolution de l'état de la pièce, au cours de son exploitation, de façon à détecter une apparition d'un défaut ou une évolution des caractéristiques de la pièce (par exemple caractéristiques mécaniques, thermiques, dimensionnelles). Cette possibilité permet de disposer d'un deuxième apprentissage particulièrement adapté à la pièce caractérisée, puisque cette dernière est utilisée pour effectuer le deuxième apprentissage.

Le deuxième apprentissage peut être réalisé à partir de mesures effectuées, sur la pièce analysée, dans différentes conditions environnementales (température, humidité), de façon à obtenir un deuxième réseau de neurones robuste à l'égard d'une variation des conditions environnementales.

Un exemple d'application est un contrôle d'un élément de structure d'un avion, par exemple un fuselage ou une aile, en disposant un réseau de capteurs à poste fixe. Les capteurs sont utilisés, dans un premier temps, pour effectuer le deuxième apprentissage. Suite au deuxième apprentissage, les capteurs sont mis en œuvre périodiquement pour la surveillance de la structure, l'interprétation des mesures étant réalisée par le deuxième réseau de neurones. Il peut par exemple s'agir de capteurs mécaniques, détectant une propagation d'une onde de flexion se propageant le long de la pièce à analyser.

Les principales étapes du premier mode de réalisation sont schématisées sur la figure 2B.

Etape 100 : constitution de la première base de données $DB_1$.

Au cours de cette étape, on constitue la première base de données $DB_1$ selon une première configuration. La première base de données peut notamment être formée d'images représentatives de mesures obtenues (effectuées ou simulées), dans des conditions de laboratoire.

Etape 110 : premier apprentissage.

Au cours de cette étape, la première base de données est utilisée pour paramétrer les blocs $A_1$ et $B_1$, de façon à optimiser la performance de prédiction d'un premier réseau de neurones convolutif $CNN_1$.

Etape 120 : constitution de la deuxième base de données $DB_2$.

Au cours de cette étape, on constitue la deuxième base de données $DB_2$ à partir de mesures expérimentales, sur la pièce à caractériser. La taille de la deuxième base de données est de préférence inférieure à la taille de la première base de données.

Etape 130 : deuxième apprentissage.

Au cours de cette étape, on utilise la deuxième base de données $DB_2$ pour effectuer un apprentissage d'un deuxième réseau de neurones convolutif $CNN_2$ formé par le premier bloc d'extraction $A_1$, résultant du premier apprentissage, et d'un deuxième bloc de classification $B_2$, adapté aux conditions expérimentales du deuxième apprentissage.

Le réseau de neurones convolutif $CNN_2$ résultant du deuxième apprentissage est destiné à être mis en œuvre pour interpréter des mesures effectuées sur la pièce utilisée. C'est l'objet de l'étape suivante.

Etape 200 : réalisation de mesures

Des mesures sont réalisées, sur la pièce examinée, selon la configuration de mesure considérée lors du deuxième apprentissage.

Etape 210 : Interprétation des mesures

On utilise le réseau de neurones convolutif $CNN_2$, résultant du deuxième apprentissage, pour caractériser la pièce examinée, à partir des mesures effectuées lors de l'étape 200. Ces caractéristiques peuvent être établies à partir de la couche de sortie $B_{out}$ du réseau de neurones convolutif $CNN_2$. Ce réseau est donc utilisé pour effectuer l'étape d'inversion des mesures.

## Exemple du premier mode de réalisation

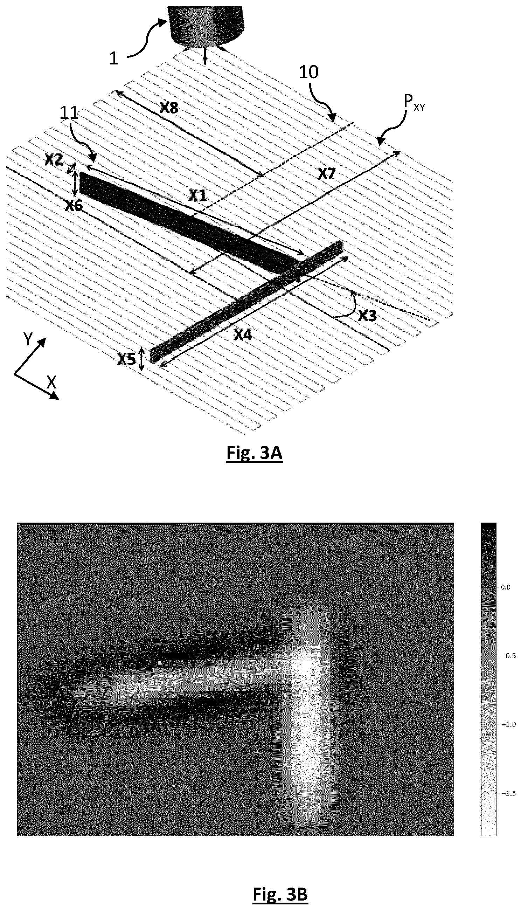

Un premier exemple de mise en œuvre de l'invention est présenté en lien avec les figures 3A à 3D. La figure 3A représente un défaut simple, de type fissure en T, présentant 7 caractéristiques de position ou de dimension :

- les caractéristiques X1, X2 et X4 sont des longueurs ou des largeurs de deux branches selon un plan $P_{XY}$;
- les caractéristiques X5 et X6 sont des profondeurs des deux branches perpendiculairement au plan $P_{XY}$ ;
- la caractéristique X3 est une caractéristique angulaire ;
- les caractéristiques X7 et X8 sont des caractéristiques de position du défaut dans le plan $P_{XY}$.

On a simulé des mesures effectuées selon une modalité de courants de Foucault, en décrivant un balayage constitué par 41 x 46 points de mesure à une distance de 0,3 mm en dessus de la pièce. La pièce était une pièce métallique plane. Le tracé régulier représenté sur la figure 3A illustre le déplacement du capteur le long de la pièce, parallèlement au plan $P_{XY}$. L'image formée sur la figure 3B est une image de la partie réelle de la variation d'impédance $\Delta H$. La variation d'impédance correspond à une différence, en chaque point de mesure, entre des impédances respectivement simulées en présence et en absence de défaut structurel dans la pièce. La figure 3B a été obtenue en considérant les caractéristiques suivantes : X1 = 11.822 mm ; X2 = 0.086 mm; X3 = -9.88° ; X4 = 11.835 mm ; X5 = 0.635 mm ; X6 = 1.127 mm ; X7 = 27.489 mm ; X8 = 24.099 mm.

Un premier apprentissage a été effectué sur la base de simulations. Au cours du premier apprentissage, on a utilisé 2000 mesures en prenant en compte un niveau de bruit très faible (rapport signal à bruit de 40 dB). Les simulations forment une première base de données $DB_1$ affectée d'un bruit faible, ce qui mime des données de laboratoire, qu'il s'agisse de données simulées ou mesurées. Chaque image d'entrée est une concaténation d'une image de la partie réelle et d'une image de la partie imaginaire de la variation d'impédance $\Delta H$ mesurée en chaque point de mesure. Au cours de cet apprentissage, on a fait varier les dimensions du défaut structurel, la forme restant la même.

Le premier apprentissage a permis de paramétrer un premier réseau de neurones convolutif $CNN_1$, comportant un premier bloc d'extraction $A_1$ et un premier bloc de classification $B_1$ tels que précédemment décrits. La couche d'entrée comporte deux images, correspondant respectivement à la partie réelle et à la partie imaginaire de la variation d'impédance $\Delta H$ aux différents points de mesure. Le bloc d'extraction $A_1$ comporte quatre couches de convolution $C_1$ à $C_4$ telles que :

- $C_1$ est obtenue en appliquant 32 noyaux de convolution de dimensions 5x5 aux deux images d'entrée.
- $C_2$ est obtenue en appliquant 32 noyaux de convolution de dimensions 3x3 à la couche $C_1$.
- $C_3$ est obtenue en appliquant 64 noyaux de convolution de dimensions 3x3 à la couche $C_2$.

Une opération de Maxpooling (regroupement selon un critère maximum) par groupes de 2x2 pixels est effectuée entre les couches C2 et C3 ainsi qu'entre la couche C3 et la couche C4, cette dernière étant convertie en un vecteur de dimension 1024.

Le vecteur de dimension 1024 issu du bloc d'extraction $A_1$ constitue la couche d'entrée $B_{in}$ d'un bloc de classification $B_1$ fully connected comportant une seule couche cachée H (512 nœuds), reliée à une couche de sortie $B_{out}$. Cette dernière est un vecteur de dimension 8, chaque terme correspondant respectivement à une estimation des dimensions X1 à X8.

Le premier réseau de neurones convolutif $CNN_1$ a été testé pour estimer les 8 paramètres dimensionnels X1 à X8 représentés sur la figure 3A. Lors du test, on a utilisé des images de tests simulées, mais représentatives de mesures expérimentales présentant trois niveaux de rapport signal à bruit, respectivement 5dB (rapport signal à bruit faible), 20 dB (rapport signal à bruit moyen), et 40 dB (rapport signal à bruit élevé). Il s'agit de simuler des rapports signal sur bruit que l'on peut rencontrer lors de mesures expérimentales, sur une pièce réelle. Sur les images de test, on a fait varier les différentes caractéristiques X1 à X8. Le rapport signal sur bruit a été simulé en ajoutant un bruit blanc gaussien aux images formant la couche d'entrée du réseau de neurones.

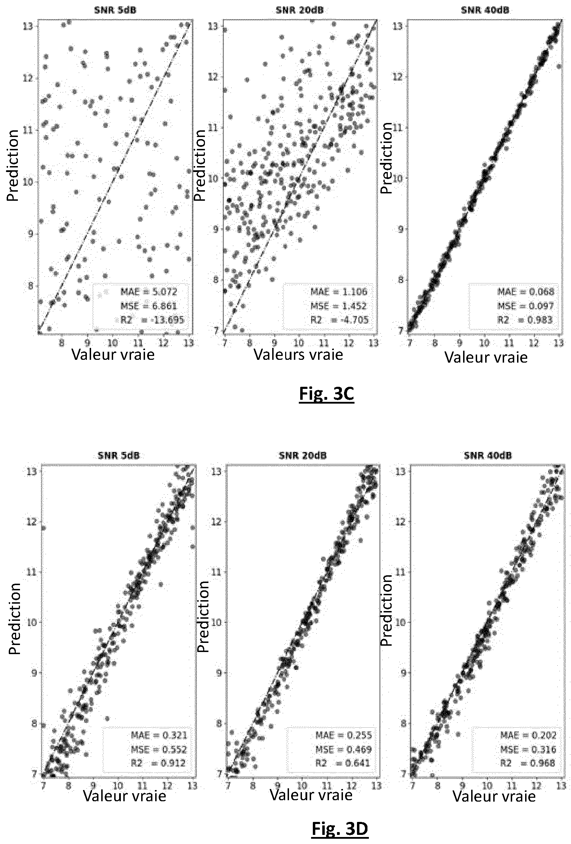

La figure 3C montre les performances de prédiction de la dimension X1 en utilisant des images de test dont le rapport signal sur bruit (SNR) est respectivement égal à 5 dB (gauche), 20 dB (centre), 40 dB (à droite). Sur chacune des courbes, l'axe des abscisses correspond aux valeurs vraies et l'axe des ordonnées correspond aux valeurs estimées par le réseau de neurones $CNN_1$. On observe que les performances de prédiction ne sont pas satisfaisantes lorsque le rapport signal sur bruit ne correspond pas à celui ayant été considéré lors de l'apprentissage. En revanche, la performance d'estimation est satisfaisante lorsque le rapport signal sur bruit correspond à celui considéré lors de l'apprentissage (40 dB). Sur chaque figure, les performances de prédiction sont quantifiées par les indicateurs MAE (Mean Absolute Error - Erreur absolue moyenne), MSE (Mean Squared Error - Erreur quadradique moyenne) et un coefficient de corrélation R2.

Les inventeurs ont formé un deuxième réseau de neurones $CNN_2$, en utilisant, dans une deuxième base de données, 20 images simulées en prenant en compte un rapport signal sur bruit de 40 dB et 20 images simulées en prenant en compte un rapport signal sur bruit de 5 dB, soit un total de 40 images. Comme précédemment décrit, le deuxième réseau de neurones $CNN_2$ a été paramétré

en conservant le bloc d'extraction $A_1$ du premier réseau de neurones $CNN_1$. Seul le bloc de classification $B_2$ du deuxième réseau de neurones a été paramétré, en conservant le même nombre de couches et le même nombre de nœuds par couche du premier réseau de neurones $CNN_1$.

Le deuxième réseau de neurones $CNN_2$ a été testé sur les mêmes données de test que le premier réseau de neurones, i-e avec des images de test présentant des rapports signal à bruit respectivement égaux à 5 dB, 20 dB et 40 dB. La figure 3D montre les performances d'estimation du deuxième réseau de neurones, relativement à l'estimation de la première dimension X1. La figure 3D est présentée de façon identique à la figure 3C : images de test dont le rapport signal sur bruit est de 5 dB (gauche), 20 dB (centre) et 40 dB (droite). Les performances de prédiction sont correctes quel que soit le rapport signal à bruit considéré.

Ce premier exemple démontre la pertinence de l'invention : elle permet une adaptation rapide d'un réseau de neurones lorsque l'on passe d'une première configuration à une deuxième configuration en modifiant les conditions dans lesquelles le premier apprentissage a été effectué, en l'occurrence le rapport signal à bruit. On notera que le deuxième réseau de neurones a été paramétré à l'aide d'une base de données de 40 images, soit 50 fois moins que la base de données utilisée lors de l'apprentissage du premier réseau de neurones.

Deuxième mode de réalisation.

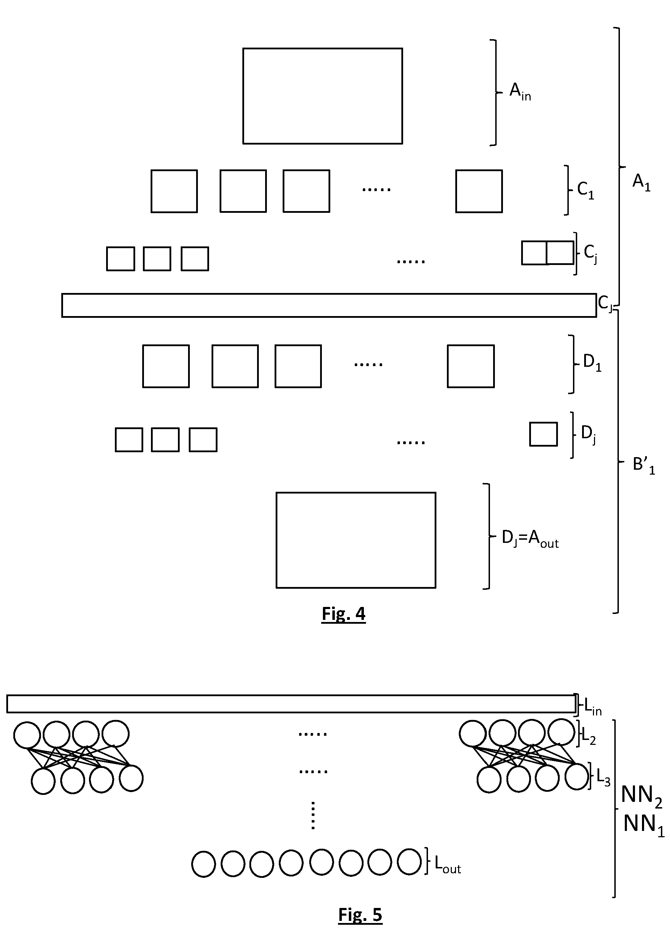

Selon un deuxième mode de réalisation, lors du premier apprentissage, on met en œuvre un premier bloc d'extraction $A_1$ couplé à un bloc de reconstruction $B'_1$. A l'instar du premier bloc de classification $B_1$ précédemment décrit, le bloc de reconstruction $B'_1$ est un bloc de traitement des données extraites par le premier bloc d'extraction $A_1$. Cette variante met en œuvre un premier réseau de neurones $CNN'_1$, de type auto-encodeur. Comme représenté sur la figure 4, le premier réseau de neurones comporte le bloc d'extraction $A_1$ et le bloc de reconstruction $B'_1$. De façon connue de l'homme du métier, un réseau de neurones de type auto-encodeur est une structure comportant un bloc d'extraction $A_1$, dit encodeur, permettant d'extraire une information pertinente à partir d'une donnée d'entrée $A_{in}$, définie dans un espace de départ. La donnée d'entrée est ainsi projetée dans un espace, dit espace latent. Dans l'espace latent, l'information extraite par le bloc d'extraction est appelée code. L'auto-encodeur comporte un bloc de reconstruction $B'_1$, permettant une reconstruction du code, de façon à obtenir une donnée de sortie $A_{out}$, définie dans un espace généralement identique à l'espace de départ. L'apprentissage est effectué de façon à minimiser une erreur entre la donnée d'entrée $A_{in}$ et la donnée de sortie $A_{out}$. Suite à l'apprentissage, le code, extrait par le bloc d'extraction, est considéré comme représentatif des caractéristiques principales de la donnée d'entrée. Autrement dit, le bloc d'extraction $A_1$ permet une compression de l'information contenue dans la donnée d'entrée $A_{in}$.

Le premier réseau de neurones peut notamment être de type auto-encodeur convolutif : chaque couche du bloc d'extraction $A_1$ résulte de l'application d'un noyau de convolution à une couche précédente. Sur la figure 4, on a représenté les couches de convolution $C_1...C_j...C_J$, la couche $C_J$ étant la dernière couche du bloc d'extraction $A_1$, comportant le code. On a également représenté les couches $D_1...D_j...D_J$ du bloc de reconstruction $B'_1$, la couche $D_J$ correspondant à la donnée de sortie $A_{out}$.

Contrairement au bloc de classification $B_1$, précédemment décrit, le bloc de reconstruction $B'_1$ ne vise pas à déterminer les caractéristiques de la pièce. Le bloc de reconstruction permet une reconstruction de la donnée sortie $A_{out}$, sur la base du code (couche $C_J$), la reconstruction étant aussi fidèle que possible à la donnée d'entrée $A_{in}$. Le bloc de classification $B_1$ et le bloc de reconstruction $B'_1$ sont utilisés à une même finalité : permettre un paramétrage du premier bloc d'extraction $A_1$, ce dernier pouvant être utilisé durant le deuxième apprentissage, pour paramétrer le deuxième bloc de classification $B_2$.

Selon cette variante, le procédé suit les étapes 100 à 210 précédemment décrites, en lien avec la figure 2B. Le premier apprentissage (étape 110) consiste à paramétrer le bloc d'extraction $A_1$. Il peut être effectué sur la base d'au moins une première base de données. L'utilisation d'un auto-encodeur permet de combiner différentes premières bases de données. Certaines bases de données sont représentatives de pièces saines, sans défaut, tandis que d'autres bases de données sont représentatives de pièces comportant un défaut. Par exemple, on peut combiner :

- des bases de données rassemblant des mesures effectuées sur une pièce saine, à différentes températures, cela pour apprendre l'effet d'une variation de température sur les mesures ;
- des bases de données rassemblant des mesures effectuées sur une pièce comportant un défaut, à une température constante, cela pour apprendre l'effet de la présence d'un défaut sur les mesures.

Le fait d'effectuer un premier apprentissage en combinant différentes bases de données, représentatives de situations différentes, permet d'obtenir un bloc d'extraction de données concentrant l'information utile de chaque image.

A la suite de l'apprentissage, les étapes 120 à 210 sont effectuées comme précédemment décrit. Il s'agit d'effectuer un deuxième apprentissage, sur la base de la deuxième base de données, acquise expérimentalement, de façon à paramétrer le bloc de classification $B_2$, en utilisant le bloc d'extraction $A_1$ résultant du premier apprentissage.

Troisième mode de réalisation

Selon un troisième mode de réalisation, les premier et deuxième réseaux de neurones sont de type « fully connected », ou perceptron multicouches, tel que représenté sur la figure 5. Contrairement au premier et au deuxième modes de réalisation, il ne s'agit pas d'un réseau de neurones convolutif.

Le premier et le deuxième réseaux de neurones comportent une couche d'entrée $L_{in}$, ou première couche, formée par des données mesurées ou simulées. Ils comportent une couche de sortie $L_{out}$, portant l'information de classification résultant du réseau de neurones.

La structure du premier et du deuxième réseau de neurones est similaire à celle des blocs de classification $B_1$, $B_2$ décrits en lien avec le premier mode de réalisation. Chaque réseau de neurones peut comporter des couches $L_k$, de rang k. Le rang k = 1 correspond à la couche d'entrée $L_{in}$. Chaque couche comporte des nœuds, dits nœuds interconnectés, le nombre de nœuds interconnectés d'une couche pouvant être différent du nombre de nœuds interconnectés d'une autre couche. Comme précédemment décrit, lorsque k ≥ 2,la valeur d'un nœud $y_{n,k}$ d'une couche de rang $k$ est telle que

$$y_{n,k} = f_n\left(\sum_m (w_{m,n}y_{m,k-1} + b_m)\right)$$

où

- $y_{m,k-1}$ est la valeur d'un nœud de la couche précédente $k$ - 1, m représentant un ordre du nœud de la couche précédente, m étant un entier compris entre 1 et $M_{k-1}$, $M_{k-1}$ correspondant à la dimension de la couche précédente, de rang $k$ - 1 ;
- $b_m$ est un biais associé à chaque nœud $y_{m,k-1}$ de la couche précédente ;
- $f_n$ est une fonction d'activation associé au nœud d'ordre $n$ de la couche considérée, $n$ étant un entier compris entre 1 et $N_k$, $N_k$ correspondant à la dimension de la couche de rang $k$;
- $w_{m,n}$ est un terme de pondération pour le noeud de rang m de la couche précédente (rang $k$-1) et le nœud de rang $n$ de couche considérée (rang $k$).

La couche de sortie $L_{out}$ comporte des valeurs permettant de caractériser la pièce à partir des mesures, expérimentales ou simulées, formant la couche d'entrée. Elle constitue le résultat de l'inversion effectuée par l'algorithme.

Selon ce mode de réalisation, on effectue un premier apprentissage, de façon à paramétrer un premier réseau de neurones interconnecté $NN_1$. Comme décrit en lien avec les premier et deuxième mode de réalisation, le premier réseau de neurones interconnecté peut être paramétré en se basant sur des données d'entrée représentatives de conditions de laboratoire, qu'il s'agisse de mesures expérimentales ou résultant de simulations. Un deuxième réseau de neurones interconnecté $NN_2$ fait alors l'objet d'un paramétrage, en utilisant des données d'entrée plus réalistes, obtenues expérimentalement, sur la pièce à caractériser pièce à caractériser. Le deuxième réseau de neurones interconnecté $NN_2$ est paramétré en utilisant, au moins partiellement, les paramètres régissant le premier réseau de neurones interconnecté $NN_1$.

Ainsi, au moins une couche $L_k$ (k>1) du deuxième réseau de neurones $NN_2$ est paramétrée en utilisant le paramétrage du premier réseau de neurones $NN_1$. Au cours du deuxième apprentissage, le deuxième réseau de neurones peut par exemple être initialisé en prenant en compte le premier réseau de neurones. De façon complémentaire, ou alternativement, le deuxième réseau de neurones peut conserver, sur au moins un nœud d'une couche, voire sur chaque nœud d'une couche, les valeurs de biais ou de gain assignés à un nœud d'une couche de même rang dans le premier réseau de neurones.

Exemple du troisième mode de réalisation.

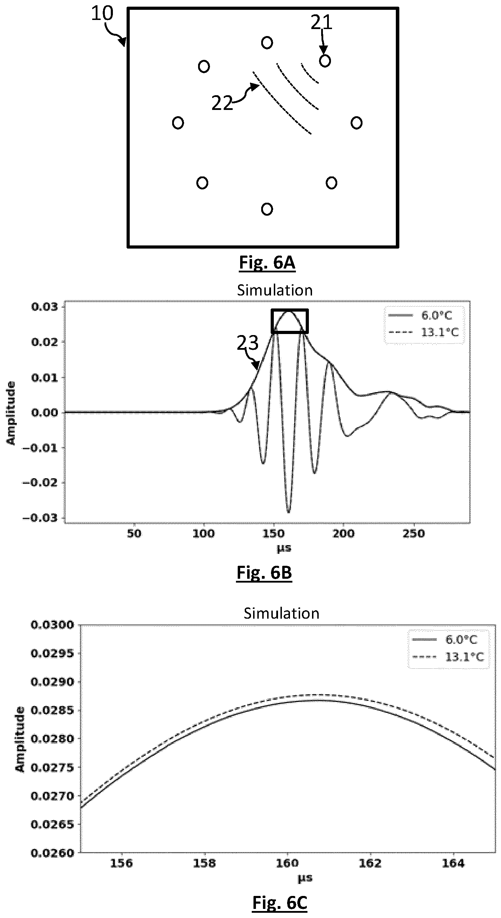

Les figures 6A à 6G illustrent un exemple de mise en œuvre de ce mode de réalisation. Sur la figure 6A, on a représenté une plaque à caractériser 10. La plaque 10 est équipée de transducteurs piézoélectriques 21 configurés pour émettre ou détecter une onde de flexion se propageant à travers la plaque. La caractérisation de la plaque consiste à mesurer des paramètres de propagation d'une onde progressive 22, se propageant entre deux transducteurs différents : un transducteur fait office d'émetteur, tandis que l'autre transducteur fait office de détecteur. Les paramètres de propagation de l'onde (en particulier vitesse de groupe et/ou l'amplitude) dépendent des propriétés élastiques de la pièce, et notamment de la densité et du module d'Young. Ces derniers dépendent de la température de la pièce. Ainsi, les paramètres de propagation de l'onde de flexion permettent d'estimer la température de la pièce. Lorsqu'on dispose de différents transducteurs piézoélectriques disposés ponctuellement autour d'une partie de la pièce, on peut définir plusieurs couples émetteurs/détecteurs. Il est alors possible d'estimer une distribution spatiale de la température dans la partie de pièce délimitée par les transducteurs, selon des algorithmes de reconstruction connus de l'homme du métier. Plus le nombre de transducteurs est élevé, meilleure est la résolution spatiale de la distribution de température.

Le recours à ce type de mesure permet de détecter l'apparition d'inhomogénéités de température, dits « points chauds », au cours de l'exploitation de la pièce, lorsque cette dernière est soumise à des contraintes. La pièce peut par exemple être un composant structurel d'un avion, par exemple une partie d'un fuselage ou d'une aile.

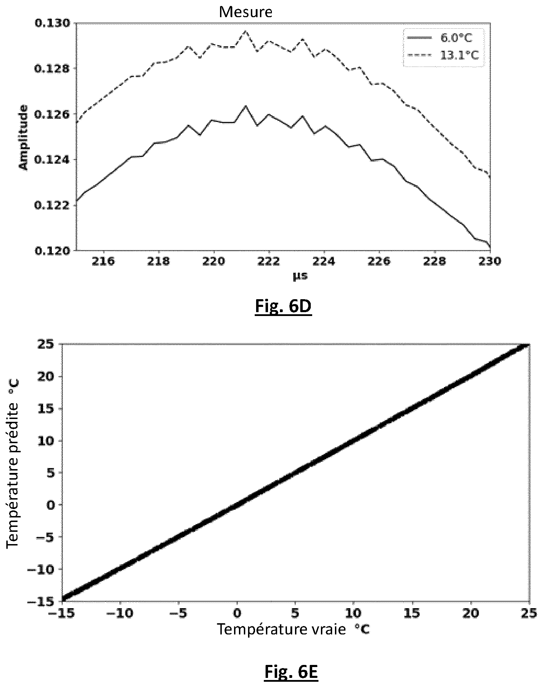

La figure 6B représente une simulation d'une d'onde progressive 22 détectée par un transducteur, en considérant deux températures : 6°C et 13°C. L'axe des abscisses représente le temps, l'origine correspondant à l'instant d'émission de l'onde par un transducteur d'émission. L'axe des ordonnées correspond à l'amplitude de l'onde. On a représenté l'enveloppe 23, permettant d'estimer la vitesse de groupe de l'onde 22. Sur la figure 6B, les courbes modélisées pour les deux températures se superposent. La figure 6C, résultant d'une simulation, montre un détail de l'enveloppe 23, dans une partie encadrée de la figure 6B, et cela pour les deux températures considérées. La figure 6D représente des résultats issus de mesures expérimentales, aux mêmes températures. Les simulations et les mesures ont été effectuées en prenant en compte une pièce parallélépipédique de section carrée, en aluminium, d'épaisseur 3 mm, et de 60 cm de côté. Les huit transducteurs piézoélectriques étaient agencés selon un cercle de diamètre 30 cm. La température de la pièce était supposée homogène.

Au cours d'un premier apprentissage, on a paramétré un réseau de neurones NN$_1$, de type perceptron multicouches. La donnée d'entrée était un échantillonnage d'une mesure temporelle de l'amplitude de l'onde 22 détectée par un transducteur 21, comportant 700 échantillons acquis selon une fréquence d'échantillonnage de 1 MHz. La donnée de sortie était une température de la pièce. On a pris en compte huit transducteurs répartis comme précédemment décrit, formant 56 couples émetteurs/détecteurs. Dans cet exemple, on a effectué des mesures en utilisant les huit couples émetteurs/détecteurs diamétralement opposés. On a formé une première base de données, comportant des ondes simulées en considérant différents couples émetteurs/détecteurs, et en faisant varier la température entre 6° et 20°.

La première base de donnée DB$_1$ a été utilisée pour paramétrer le premier réseau de neurones NN$_1$, comportant deux couches cachées formées respectivement de 32 et 16 nœuds. La couche de sortie comportait un nœud, correspondant à une estimation de la valeur de la température de la pièce.

Le premier réseau de neurones NN$_1$ a fait l'objet d'un test, à l'aide de données simulées non utilisées pour l'apprentissage. La figure 6E représente la température estimée par le premier réseau de neurones (axe des ordonnées) en fonction de la température prise en compte pour effectuer la simulation (axe des abscisses). La plage de température s'étendait entre -15°C et 25 °C. Le coefficient de corrélation R$^2$ s'élève à 0.99994, soit proche de 1.

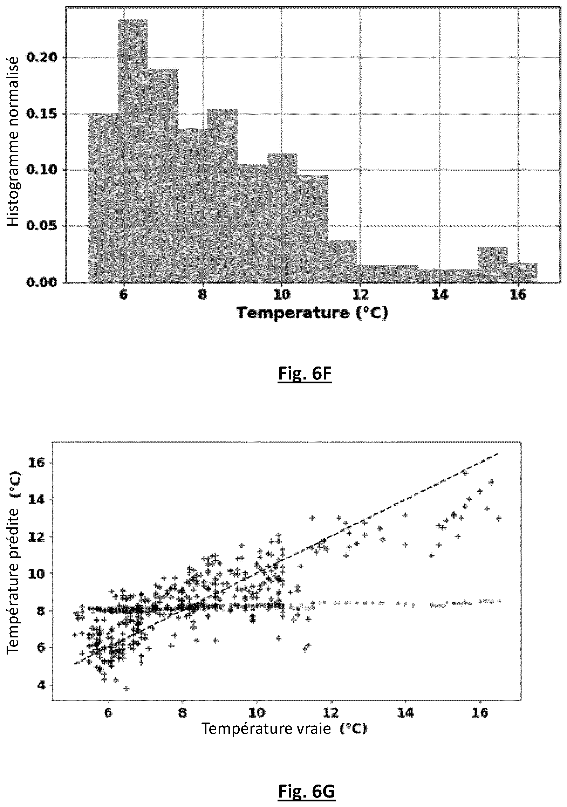

On a établi une deuxième base de données DB$_2$, à partir de mesures expérimentales acquises sur une pièce d'aluminium, instrumentée par huit transducteurs piézoélectriques décrivant un cercle de 30 cm. Une telle configuration correspond à la configuration simulée pour former la première base de données DB$_1$. Au cours des essais expérimentaux, la température a varié entre 5°C et 17 °C. La figure 6F représente un histogramme normalisé des températures prises en compte pour constituer la deuxième base de données DB$_2$.

A l'aide de la deuxième base de données, on a paramétré un deuxième réseau de neurones NN$_2$, dont la structure était identique au premier réseau de neurones. Le deuxième réseau de neurones NN$_2$ a été initialisé en considérant les paramètres du premier réseau de neurones NN$_1$. Le deuxième réseau de neurones a été adapté, en fonction des mesures expérimentales effectuées sur la pièce. Pour effectuer l'apprentissage, on a pris en compte 50 données d'entrée différentes. Le deuxième réseau de neurones a été testé à l'aide de données de test, non utilisées pour l'apprentissage, correspondant à des mesures effectuées alors que la température de la pièce était connue.

La deuxième base de données a été utilisée pour paramétrer un réseau de neurones dit de base, de structure analogue au premier et au deuxième réseaux de neurones (même nombre de couches, même nombre de nœuds par couche et même dimension de la couche d'entrée). Le réseau de neurones de base a été paramétré ex nihilo, c'est-à-dire sans utiliser le paramétrage du premier réseau de neurones.

La figure 6G représente les température estimées par le deuxième réseau de neurones (axe des ordonnées - marques en croix) et par le réseau de neurones de base (axe des ordonnées - marques formant des points) en fonction de la température de la pièce (axe des abscisses). La plage de température s'étendait entre 5°C et 17 °C.

En utilisant le deuxième réseau de neurones, le coefficient de corrélation R$^2$ s'élève à 0.686, sachant qu'on disposait de peu de données d'apprentissage sur la plage de température 12°C - 17 °C (cf. figure 6F). En utilisant le réseau de neurones de base, le coefficient de corrélation R$^2$ s'élève à 0.073, du fait de la petite taille de deuxième base de données. On note la différence des coefficients de corrélation résultant d'une même base de données, en mettant en œuvre l'invention, c'est-à-dire en partant du premier réseau de neurones, et sans mettre en œuvre l'invention. Cela atteste de la pertinence de l'invention, puisque l'on peut obtenir rapidement un deuxième réseau de neurones performant, même avec un faible nombre de données d'apprentissage.

Quel que soit le mode de réalisation, à partir d'un même premier réseau de neurones, on peut paramétrer autant de deuxièmes réseaux de neurones que de pièces à caractériser. Ainsi, à partir d'un même premier réseau de neurones, on peut paramétrer deux réseaux de neurones différents, adaptés à des pièces différentes, pouvant par exemple correspondre à deux parties différentes d'un avion (fuselage et aile)..

L'invention peut s'appliquer à d'autres modalités usuellement pratiquées dans le domaine du contrôle non destructif. Plus précisément, les autres modalités envisageables sont :

- les contrôles par ultrasons, selon lesquels une onde acoustique se propage à travers une pièce examinée. Cela concerne les mesures de type échographie, dans lesquelles les mesures sont généralement représentatives de la réflexion, par un défaut structurel, d'une onde ultrasonore incidente. Cela concerne également la propagation d'ondes ultrasonores guidées. Dans ce type de modalité, les grandeurs physiques adressées sont les propriétés de propagation d'ondes ultrasonore dans la matière, la présence d'un défaut se traduisant par une variation des propriétés de propagation par rapport à une pièce en l'absence de défaut. On peut obtenir des images représentatives de la propagation d'une onde ultrasonore le long d'une pièce ou à travers cette dernière.
- les contrôles par rayons X ou gamma, selon lesquels la pièce examinée est soumise à une irradiation par un rayonnement électromagnétique ionisant. La présence d'un défaut structurel se traduit par une modification des propriétés de transmission du rayonnement d'irradiation. Les mesures permettent d'obtenir des images représentatives de la transmission du rayonnement d'irradiation à travers la pièce examinée.
- les contrôles par thermographie, selon lesquels la pièce examinée est soumise à une illumination par une onde lumineuse, par exemple dans la bande spectrale infra-rouge. La présence d'un défaut se traduit par une modification des propriétés de réflexion de l'onde lumineuse. Les mesures permettent d'obtenir des images représentatives de la réflexion de l'onde lumineuse par la pièce examinée.

L'invention pourra être utilisée pour la caractérisation d'éléments de structure nécessitant une surveillance régulière dans le temps, par exemple un élément de structure d'un aéronef. Elle permet d'utiliser des capteurs à postes fixes, embarqués sur la pièce, ces derniers pouvant être utilisés lors de l'apprentissage.

**Revendications**

1. Procédé de caractérisation d'une pièce (10), comportant les étapes suivantes :

 a) réalisation de mesures non destructives à l'aide d'un capteur (11), le capteur étant disposé sur la pièce ou face à la pièce, et configuré pour mesurer une grandeur physique permettant une caractérisation mécanique ou thermique de la pièce ;
 b) utilisation des mesures en tant que données d'entrée d'un réseau de neurones ($NN_2$, $CNN_2$), le réseau de neurones comportant une couche d'entrée, établie à l'aide des données d'entrée, et une couche de sortie, comportant au moins un nœud ;
 c) en fonction de la valeur du nœud ou de chaque nœud de la couche de sortie du réseau de neurones, caractérisation de la pièce ;
 le procédé comportant, préalablement aux étapes b) et c) :

 - constitution d'une première base de données ($DB_1$), la première base de données comportant des mesures de la grandeur physique effectuées ou simulées, sur une première pièce modèle, la première pièce modèle étant une pièce réelle, différente de la pièce à caractériser, ou une pièce modélisée, représentant la pièce à caractériser ;
 - prise en compte d'un premier réseau de neurones ($CNN_1$, $CNN'_1$, $NN_1$), le premier réseau de neurones étant paramétré par des paramètres définis lors d'un premier apprentissage, en utilisant la première base de données ($DB_1$) ;

 le procédé étant **caractérisé en ce qu'**il comporte également, préalablement aux étapes b) et c):

 - une constitution d'une deuxième base de données ($DB_2$), comportant des mesures expérimentales de la grandeur physique effectuées sur la pièce à caractériser;
 - un deuxième apprentissage, en utilisant la deuxième base de données ($DB_2$), de façon à paramétrer un deuxième réseau de neurones ($CNN_2$, $NN_2$), le deuxième apprentissage utilisant des paramètres du premier réseau de neurones ($CNN_1$, $CNN'_1$, $NN_1$), définis lors du premier apprentissage ;
 - de telle sorte que lors de l'étape c), le réseau de neurones utilisé est le deuxième réseau de neurones ($CNN_2$, $NN_2$), résultant du deuxième apprentissage, le deuxième réseau de neurones étant utilisé pour suivre une évolution de l'état de la pièce à caractériser.

2. Procédé selon la revendication 1, dans lequel :

 - le premier réseau de neurones ($NN_1$) comporte une couche d'entrée et une couche de sortie, et éventuellement une couche intermédiaire, entre la couche d'entrée et la couche de sortie ;
 - le deuxième apprentissage comporte une adaptation de la couche de sortie et/ou de l'éventuelle couche intermédiaire du premier réseau de neurones, de façon à former une couche du deuxième réseau de neurones.

3. Procédé selon l'une quelconque des revendications précédentes, dans lequel :

- le premier réseau de neurones (CNN$_1$, CNN'$_1$) est un réseau de neurones convolutif, comportant un bloc d'extraction (A$_1$) et un bloc de traitement (B$_1$, B'$_1$), le premier réseau de neurones étant tel que :

• le bloc d'extraction (A$_1$) est configuré pour extraire des caractéristiques des données d'entrée du premier réseau de neurones, les données d'entrée résultant de la première base de données (DB$_1$) ;
• le bloc de traitement (B$_1$, B'$_1$) est configuré pour traiter des caractéristiques extraites par le bloc d'extraction;

- le deuxième réseau de neurones (CNN$_2$, CNN'$_2$) est un réseau de neurones convolutif, comportant :

• le bloc d'extraction (A$_1$) du premier réseau de neurones ;
• ainsi qu'un bloc de de classification (B$_2$), le bloc classification étant configuré pour effectuer une classification des caractéristiques extraites par le bloc d'extraction, le bloc de classification débouchant sur la couche de sortie du deuxième réseau de neurones.

4. Procédé selon la revendication 3, dans lequel le bloc de traitement du premier réseau de neurones est un bloc de classification (B$_1$), configuré, lors du premier apprentissage, pour effectuer une classification des caractéristiques extraites par le bloc d'extraction.

5. Procédé selon la revendication 4, dans lequel le premier réseau de neurones (CNN'$_1$) est de type auto-encodeur, le bloc de traitement (B'$_1$) du premier réseau de neurones étant configuré, lors du premier apprentissage, pour reconstruire des données, issues de la première base de données (DB$_1$), et formant des données d'entrée du premier réseau de neurones.

6. Procédé selon l'une quelconque des revendications 1 à 2, dans lequel le premier et le deuxième réseaux de neurones sont de type perceptron multicouches.

7. Procédé selon l'une quelconque des revendications précédentes, dans lequel le premier réseau de neurones est utilisé pour initialiser l'apprentissage de tout ou partie du deuxième réseau de neurones.

8. Procédé selon l'une quelconque des revendications précédentes, dans lequel au cours du deuxième apprentissage ainsi qu'au cours d'au moins une étape a), voire de chaque étape a), postérieurement au deuxième apprentissage, le capteur peut être disposé à poste fixe, embarqué sur la pièce.

9. Procédé selon l'une quelconque des revendications précédentes, dans lequel :

- la pièce est susceptible de comporter un défaut ;
- l'étape c) comporte une détection de la présence d'un défaut dans la pièce, et une caractérisation éventuelle du défaut détecté.

10. Procédé selon la revendication 9, dans lequel la caractérisation de la pièce comporte :

- une identification du type de défaut, parmi des types prédéterminés ;
- et/ou une estimation d'au moins une dimension du défaut ;
- et/ou une localisation du défaut dans la pièce ;
- et/ou une détermination d'un nombre de défauts dans la pièce.

11. Procédé selon la revendication 9 ou la revendication 10, dans lequel la première base de données comporte des mesures effectuées ou simulées sur une pièce modèle comportant le défaut.

12. Procédé selon l'une quelconque des revendications précédentes, dans lequel les mesures sont représentatives d'une distribution spatiale :

- de propriétés électriques ou magnétiques ou mécaniques de la pièce ;
- d'une propriété de propagation d'une onde acoustique ou mécanique ou électromagnétique à travers ou le long de la pièce ;
- d'une propriété de réflexion d'une onde acoustique ou mécanique ou d'une onde électromagnétique visible ou infra-rouge par la pièce.

13. Procédé selon l'une quelconque des revendications précédentes, dans lequel la caractérisation de la pièce comporte :

- une obtention d'une température de la pièce ou d'un contrainte à laquelle est soumise la pièce ;
- ou une obtention d'une distribution spatiale d'une température de la pièce, ou d'une contrainte à laquelle est soumise la pièce.

14. Procédé selon l'une quelconque des revendications précédentes, dans lequel les mesures sont de type :

- mesure de courants de Foucault formés dans la pièce sous l'effet d'une excitation de la pièce par un champ magnétique ;

- ou mesure d'ondes acoustiques ou mécaniques se propageant à travers ou le long de la pièce ;
- ou mesure d'une onde lumineuse réfléchie par la pièce lorsque la pièce est illuminée par une onde lumineuse incidente, en particulier dans les domaines infra-rouge ou visible;
- ou mesure de la transmission d'un rayonnement X ou gamma à travers la pièce lorsque ladite pièce est irradiée par une source de rayonnement X ou gamma.

15. Procédé selon l'une quelconque des revendications précédentes, dans lequel la deuxième base de données comporte un nombre de données inférieur au nombre de données de la première base de données.

## Patentansprüche

1. Verfahren zur Charakterisierung eines Teils (10), umfassend die folgenden Schritte:

   a) Ausführen von zerstörungsfreien Messungen mithilfe eines Sensors (11), wobei der Sensor auf dem Teil oder gegenüber dem Teil angeordnet ist und dazu ausgestaltet ist, eine physikalische Größe zu messen, die eine mechanische oder thermische Charakterisierung des Teils ermöglicht;
   b) Verwenden der Messungen als Eingabedaten eines neuronalen Netzes ($NN_2$, $CNN_2$), das neuronale Netz umfassend eine Eingabeschicht, die mithilfe der Eingabedaten erstellt wird, und eine Ausgabeschicht, die mindestens einen Knoten umfasst;
   c) in Abhängigkeit von dem Wert des Knotens oder jedes Knotens der Ausgabeschicht des neuronalen Netzes, Charakterisierung des Teils;
   wobei das Verfahren, vor den Schritten b) und c), umfasst:

   - Aufbauen einer ersten Datenbank ($DB_1$), wobei die erste Datenbank Messungen der physikalischen Größe umfasst, die an einem ersten Modellteil durchgeführt oder simuliert wurden, wobei das erste Modellteil ein reales Teil ist, das verschieden von dem zu charakterisierenden Teil ist, oder ein modelliertes Teil, welches das zu charakterisierende Teil repräsentiert;
   - Berücksichtigen eines ersten neuronalen Netzes ($CNN_1$, $CNN'_1$, $NN_1$), wobei das erste neuronale Netz durch Parameter parametriert ist, die bei einem ersten Lernen unter Verwendung der ersten Datenbank

   ($DB_1$) definiert werden;

   wobei das Verfahren **dadurch gekennzeichnet ist, dass** es ferner, vor den Schritten b) und c), umfasst:

   - ein Aufbauen einer zweiten Datenbank ($DB_2$), die experimentelle Messungen der physikalischen Größe umfasst, die an dem zu charakterisierenden Teil durchgeführt werden;
   - ein zweites Lernen unter Verwendung der zweiten Datenbank ($DB_2$), so dass ein zweites neuronales Netz ($CNN_2$, $NN_2$) parametriert wird, wobei das zweite Lernen Parameter des ersten neuronalen Netzes ($CNN_1$, $CNN'_1$, $NN_1$) verwendet, die bei dem ersten Lernen definiert werden;
   - so dass das bei dem Schritt c) verwendete neuronale Netz das zweite neuronale Netz ($CNN_2$, $NN_2$) ist, das aus dem zweiten Lernen resultiert, wobei das zweite neuronale Netz dazu verwendet wird, eine Entwicklung des Zustands des zu charakterisierenden Teils zu verfolgen.

2. Verfahren nach Anspruch 1, wobei:

   - das erste neuronale Netz ($NN_1$) eine Eingabeschicht und eine Ausgabeschicht und gegebenenfalls eine Zwischenschicht zwischen der Eingabeschicht und der Ausgabeschicht umfasst;
   - das zweite Lernen eine Anpassung der Ausgabeschicht und/oder der etwaigen Zwischenschicht des ersten neuronalen Netzes umfasst, so dass eine Schicht des zweiten neuronalen Netzes gebildet wird.

3. Verfahren nach einem der vorhergehenden Ansprüche, wobei:

   - das erste neuronale Netz ($CNN_1$, $CNN'_1$) ein faltendes neuronales Netz ist, das einen Extraktionsblock ($A_1$) und einen Verarbeitungsblock ($B_1$, $B'_1$) umfasst, wobei das erste neuronale Netz dergestalt ist, dass:

     • der Extraktionsblock ($A_1$) dazu ausgestaltet ist, Merkmale der Eingabedaten des ersten neuronalen Netzes zu extrahieren, wobei die Eingabedaten aus der ersten Datenbank ($DB_1$) resultieren;
     • der Verarbeitungsblock ($B_1$, $B'_1$) dazu ausgestaltet ist, von dem Extraktionsblock extrahierte Merkmale zu verarbeiten;

   - das zweite neuronale Netz ($CNN_2$, $CNN'_2$) ein

faltendes neuronales Netz ist, umfassend:

- den Extraktionsblock ($A_1$) des ersten neuronalen Netzes;
- sowie einen Klassifikationsblock ($B_2$), wobei der Klassifikationsblock dazu ausgestaltet ist, eine Klassifikation der von dem Extraktionsblock extrahierten Merkmale durchzuführen, wobei der Extraktionsblock an der Ausgabeschicht des zweiten neuronalen Netzes mündet.

4. Verfahren nach Anspruch 3, wobei der Verarbeitungsblock des ersten neuronalen Netzes ein Klassifikationsblock ($B_1$) ist, der dazu ausgestaltet ist, bei dem ersten Lernen eine Klassifikation der von dem Extraktionsblock extrahierten Merkmale durchzuführen.

5. Verfahren nach Anspruch 4, wobei das erste neuronale Netz ($CNN'_1$) vom Autoencoder-Typ ist, wobei der Verarbeitungsblock ($B'_1$) des ersten neuronalen Netzes dazu ausgestaltet ist, bei dem ersten Lernen Daten zu rekonstruieren, die aus der ersten Datenbank ($DB_1$) stammen und Eingabedaten des ersten neuronalen Netzes bilden.

6. Verfahren nach einem der Ansprüche 1 bis 2, wobei das erste und das zweite neuronale Netz vom mehrschichtigen Perceptron-Typ sind.

7. Verfahren nach einem der vorhergehenden Ansprüche, wobei das erste neuronale Netz dazu verwendet wird, das Lernen des gesamten oder eines Teils des zweiten neuronalen Netzes zu initialisieren.

8. Verfahren nach einem der vorhergehenden Ansprüche, wobei während des zweiten Lernens sowie während mindestens eines Schritts a) oder sogar jedes Schritts a), nach dem zweiten Lernen, der Sensor stationär auf dem Teil angeordnet sein kann.

9. Verfahren nach einem der vorhergehenden Ansprüche, wobei:

- das Teil einen Fehler umfassen könnte;
- der Schritt c) ein Detektieren des Vorhandenseins eines Fehlers in dem Teil und eine etwaige Charakterisierung des detektierten Fehlers umfasst.

10. Verfahren nach Anspruch 9, wobei die Charakterisierung des Teils umfasst:

- ein Identifizieren des Fehlertyps unter vorbestimmten Typen;
- und/oder ein Einschätzen mindestens einer Dimension des Fehlers;

- und/oder ein Verorten des Fehlers in dem Teil;
- und/oder ein Bestimmen einer Anzahl von Fehlern in dem Teil.

11. Verfahren nach Anspruch 9 oder Anspruch 10, wobei die erste Datenbank Messungen umfasst, die an einem den Fehler umfassenden Modellteil durchgeführt oder simuliert werden.

12. Verfahren nach einem der vorhergehenden Ansprüche, wobei die Messungen repräsentativ sind für eine räumliche Verteilung:

- von elektrischen oder magnetischen oder mechanischen Eigenschaften des Teils;
- einer Ausbreitungseigenschaft einer akustischen oder mechanischen oder elektromagnetischen Welle durch das Teil hindurch oder entlang des Teils;
- einer Reflexionseigenschaft einer akustischen oder mechanischen Welle oder einer sichtbaren oder infraroten elektromagnetischen Welle durch das Teil.

13. Verfahren nach einem der vorhergehenden Ansprüche, wobei die Charakterisierung des Teils umfasst:

- ein Erhalten einer Temperatur des Teils oder einer Beanspruchung, der das Teil unterworfen ist;
- oder ein Erhalten einer räumlichen Verteilung einer Temperatur des Teils oder einer Beanspruchung, der das Teil unterworfen ist.

14. Verfahren nach einem der vorhergehenden Ansprüche, wobei die Messungen vom folgenden Typ sind:

- Messung von Wirbelströmen, die in dem Teil unter der Wirkung einer Anregung des Teils durch ein Magnetfeld gebildet werden;
- oder Messung von akustischen oder mechanischen Wellen, die sich durch das Teil hindurch oder entlang des Teils ausbreiten;
- oder Messung einer Lichtwelle, die von dem Teil reflektiert wird, wenn das Teil durch eine einfallende Lichtwelle, insbesondere in den infraroten oder sichtbaren Bereichen, beleuchtet wird;
- oder Messung der Transmission einer Röntgen- oder Gammastrahlung durch das Teil hindurch, wenn das Teil von einer Röntgen- oder Gammastrahlungsquelle bestrahlt wird.

15. Verfahren nach einem der vorhergehenden Ansprüche, wobei die zweite Datenbank eine Anzahl von Daten umfasst, die geringer als die Anzahl von Daten der ersten Datenbank ist.

**Claims**

1. Method for characterizing a part (10), comprising the following steps:

   a) carrying out non-destructive measurements using a sensor (11), the sensor being placed on the part or facing the part, and being configured to measure a physical quantity allowing a mechanical or thermal characterization of the part;
   b) using the measurements as input data of a neural network ($NN_2$, $CNN_2$), the neural network comprising an input layer, established using the input data, and an output layer, comprising at least one node;
   c) depending on the value of the node or of each node of the output layer of the neural network, characterizing the part;
   the method comprising, prior to steps b) and c):

   - constructing a first database ($DB_1$), the first database containing measurements of the physical quantity, said measurements being performed or simulated, on a first model part, the first model part being a real part, different from the part to be characterized, or a modelled part, which represents the part to be characterized;
   - employing a first neural network ($CNN_1$, $CNN'_1$, $NN_1$), the first neural network being parametrized by parameters defined during a first training operation, using the first database ($DB_1$);

   the method being **characterized in that** it also comprises, before steps b) an c):

   - constructing a second database ($DB_2$), containing experimental measurements of the physical quantity performed on the part to be characterized;
   - a second training operation, using the second database ($DB_2$), so as to parametrize a second neural network ($CNN_2$, $NN_2$), the second training operation using parameters of the first neural network ($CNN_1$, $CNN'_1$, $NN_1$) defined in the first training operation;
   - such that in step c), the neural network used is the second neural network ($CNN_2$, $NN_2$), resulting from the second training operation, the second neural network being used to monitor a variation in the state of the characterized part.

2. Method as claimed in claim 1, wherein:

   - the first neural network ($NN_1$) comprises an input layer and an output layer, and optionally an intermediate layer, between the input layer and the output layer;
   - the second training operation comprises adapting the output layer and/or the optional intermediate layer of the first neural network, so as to form a layer of the second neural network.

3. Method as claimed in either one of the preceding claims, wherein:

   - the first neural network ($CNN_1$, $CNN'_1$) is a convolutional neural network, comprising an extracting block ($A_1$) and a processing block ($B_1$, $B'_1$), the first neural network being such that:

     • the extracting block ($A_1$) is configured to extract features from the input data of the first neural network, the input data resulting from the first database ($DB_1$);
     • the processing block ($B_1$, $B'_1$) is configured to process features extracted by the extracting block;

   - the second neural network ($CNN_2$, $CNN'_2$) is a convolutional neural network, comprising:

     • the extracting block ($A_1$) of the first neural network;
     • and a classifying block ($B_2$), the classifying block being configured to perform a classification of the features extracted by the extracting block, the classifying block outputting to the output layer of the second neural network.

4. Method as claimed in claim 3, wherein the processing block of the first neural network is a classifying block ($B_1$), configured, in the first training operation, to perform a classification of the features extracted by the extracting block.

5. Method as claimed in claim 4, wherein the first neural network ($CNN'_1$) is an autoencoder, the processing block ($B'_1$) of the first neural network being configured, in the first training operation, to reconstruct data obtained from the first database ($DB_1$), and forming input data of the first neural network.

6. Method as claimed in either one of claims 1 to 2, wherein the first and second neural networks are multilayer perceptrons.

7. Method as claimed in any one of the preceding claims, wherein the first neural network is used to initialize the training of all or some of the second neural network.

8. Method as claimed in any one of the preceding claims, wherein, in the second training operation and in the course of at least one step a), or even each step a), subsequent to the second training operation, the sensor may be placed in situ, installed on the part.

9. Method as claimed in any one of the preceding claims, wherein:

   - the part is liable to comprise a defect;
   - step c) comprises detecting the presence of a defect in the part, and optionally characterizing the detected defect.

10. Method as claimed in claim 9, wherein the characterization of the part comprises:

    - identification of the type of defect, among predetermined types;
    - and/or estimation of at least one dimension of the defect;
    - and/or location of the defect in the part;
    - and/or determination of a number of defects in the part.

11. Method as claimed in claim 9 or claim 10, wherein the first database comprises measurements performed or simulated on a model part comprising the defect.

12. Method as claimed in any one of the preceding claims, wherein the measurements are representative of a spatial distribution:

    - of electrical or magnetic or mechanical properties of the part;
    - of a property of propagation of an acoustic or mechanical or electromagnetic wave through or along the part;
    - of a property of reflection of an acoustic or mechanical or visible or infrared electromagnetic wave by the part.

13. Method as claimed in any one of the preceding claims, wherein the characterization of the part comprises:

    - obtaining a temperature of the part or a stress to which the part is subjected;
    - or obtaining a spatial distribution of a temperature of the part, or of a stress to which the part is subjected.

14. Method as claimed in any one of the preceding claims, wherein the measurements are of the following type:

    - measurements of eddy currents formed in the part under the effect of excitation of the part by a magnetic field;
    - or measurements of acoustic or mechanical waves propagating through or along the part;
    - or measurement of a light wave reflected by the part when the part is illuminated by an incident light wave, in particular in the infrared or visible domains;
    - or measurement of the transmission of X-ray or gamma radiation through the part when said part is irradiated by a source of X-ray or gamma radiation.

15. Method as claimed in any one of the preceding claims, wherein the second database comprises a number of data lower than the number of data of the first database.

EP 4 200 604 B1

**Fig. 1A**

**Fig. 1B**

20

**Fig. 2A**

**Fig. 2B**

**Fig. 3A**

**Fig. 3B**

Fig. 3C

Fig. 3D

$A_{in}$

$C_1$

$C_j$

$C_J$

$A_1$

$D_1$

$D_j$

$D_J = A_{out}$

$B'_1$

**Fig. 4**

$L_{in}$

$L_2$

$L_3$

$L_{out}$

$NN_2$
$NN_1$

**Fig. 5**

**Fig. 6A**

**Fig. 6B**

**Fig. 6C**

**Fig. 6D**

**Fig. 6E**

**Fig. 6F**

**Fig. 6G**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019094124 A1

**Littérature non-brevet citée dans la description**

- **PEI CAO et al.** Pre-Processing-Free Gear Fault Diagnosis Using Small Datasets with Deep Convolutional Neural Network-Based Transfer Learning. Cornell University Library, 24 October 2017, 1-15

- **LIU QING et al.** A Fault Diagnosis Method Based on Transfer Convolutional Neural Networks. *IEEE Access*, 11 December 2019, vol. 7, 171423-171430